# EUROPEAN PATENT SPECIFICATION

(11) **EP 1 183 944 B1**
(45) Date of publication and mention of the grant of the patent: **25.04.2007**
(21) Application number: 01119375.2
(22) Date of filing: 10.08.2001
(51) Int. Cl.: A01G 25/16

(54) **Gas irrigation control system based on soil moisture determination through porous capsules**
Gasgesteuertes Bewässerungssystem auf Basis von Bodenfeuchtigkeitsbestimmung durch poröse Kapseln
Système de commande d'irrigation contrôlé à gaz basé sur la détermination de l'humidité du sol par des capsules poreuses

(30) Priority: 30.08.2000 BR 0004264
(43) Date of publication of application: 06.03.2002
(73) Proprietor: Empresa Brasileira de Pesquisa Agropecuaria - EMBRAPA, Brasilia, DF 70770-901 (BR)
(72) Inventor: Calbo, Adonai Gimenez, Brasilia, DF 70770-001 (BR)
(74) Representative: Grünecker, Kinkeldey, Stockmair & Schwanhäusser Anwaltssozietät

(56) References cited:
- EP-A- 0 855 135
- WO-A-86/04212
- FR-A- 2 735 327
- US-A- 3 840 182
- US-A- 3 981 446
- US-A- 4 055 200

## Description

The present invention refers to an irrigation system automatically controlled through porous capsules that are installed in the soil with the aim of determining the level of critical moisture for irrigation. The depth of the capsules in the soil will depend, among other factors, on the crop to be irrigated and on the development of the roots. The capsule functions through the depressurization caused by the opening of its pores when the soil moisture becomes lower than what is considered critical, according to the characteristics of the porous capsules used. This gas depressurization acts on appropriate devices, such as differential valves and pressure switches.

The irrigation may be activated by appropriate devices, such as pressure switches, differential valves, level controlling ball-floats, etc.

### BACKGROUND OF THE INVENTION

The available soil irrigation systems present various levels of complexity and may be divided in two groups; the criterion for such division is whether or not they depend on the soil moisture as the determining parameter for the moment to activate irrigation. The independent systems are automatically activated at previously set time intervals based on soil and weather conditions, and on the type of plant, ignoring, thus, the plants' real needs. Examples of such systems are described in documents US 5882141 and EP 71176.

Thus, the quantitative determination of the best moment to irrigate remains a challenge. Such decision is usually based on empirical and qualitative criteria, and the commercial use of soil moisture sensors for irrigation control is still, generally speaking, very limited. Some of the best known sensors are the porous capsule tensiometers, which operate in a regime of hydric saturation.

Irrigation systems that use porous capsules or porous elements fixed to the ground do not always do so as a means of measuring the soil moisture. The systems described in documents US 3840182 and FR 2196744 can be cited as examples of such: the porous element has the function of controlling the release of water so that the plant may have practically continuous supply of water, independently of the soil's saturation level. The disadvantage of such systems is the fact that if the natural evaporation rate is higher than expected, the water supply might not be sufficient to provide for the plants' needs.

Another way to solve this problem has been the use of tensiometers to measure the soil moisture. However, the tensiometers used for irrigation control are usually quite voluminous, so as to be able to activate the mechanical or electronic pressure switches without the need of an excessively long response time. This problem is aggravated by accumulation of air within the tensiometer's pipes. Due to their compressibility, the air bubbles cause the volumes of water exchange per tension variation unit to increase exponentially as the water tension module asintotically approaches the barometric pressure. Therefore, the tensiometers are limited to a range of work between zero and the barometric pressure. It occurs even in the tensiometers whose capsules are covered with thinly porous material, in which such limitation persists due to the air bubbles that form in the larger cavities connecting the capsule to the pressure sensor. Besides, the thinly porous capsules have low hydraulic conductivity, a fact that makes the response time too long. Document US 4567563 describes an irrigation system with a tensiometer which has been made more automated and complex in order to provide for the limitations of such type of moisture gauge.

The limitations presented by tensiometers may also be solved by the system described in document US 3874590, which determines the soil moisture through a sensor based on the expansion and retraction properties of a water absorbent material in contact with the soil. The sensor commands an on/off valve that starts irrigation when the absorbent material is retracted (dry soil) and cuts the water supply when the material is fully expanded (moist soil). This kind of sensor presents the same disadvantages as the tensiometers.

Document BR PI 9003611 presents the hydro-marker (*hidrobalizador*), a sensor used in irrigation systems which determines the soil moisture's point of recharge based on the energetic state of the water in the soil, taking into consideration the critical point of the soil's blade of useful water without the need for complex calculations and interpretations that require qualified personnel. Such device is presented as a means to eliminate the disadvantages of the tensiometers known in the market; however, it does not solve one of the negative characteristics of previous tensiometers, i.e., the fact that they operate under hydric saturation.

The system being proposed now overcomes the difficulties presented by automatic irrigation systems based on sensors such as tensiometers.

### SUMMARY OF THE INVENTION

An automatic irrigation system in accordance with generic clause of claim 1 is known from US 4,055,200.

It is the ojbect of the present invention to provide an automatic irrigation system that uses porous capsules to determine the critical soil moisture for irrigation.

This object is solved by an irrigation system having the features of claim 1.

Further embodiments are claimed in the depending claims.

### BRIEF DESCRIPTION OF THE FIGURES

**Figure 1:** Schematic drawing of a system assembled for punctual irrigation.
**Figure 2:** Schematic drawing of a differential valve that may be used as a transducer in the invented system.
**Figure 3:** Synthetic diagram of the invented system's functioning.

### DETAILED DESCRIPTION OF THE INVENTION

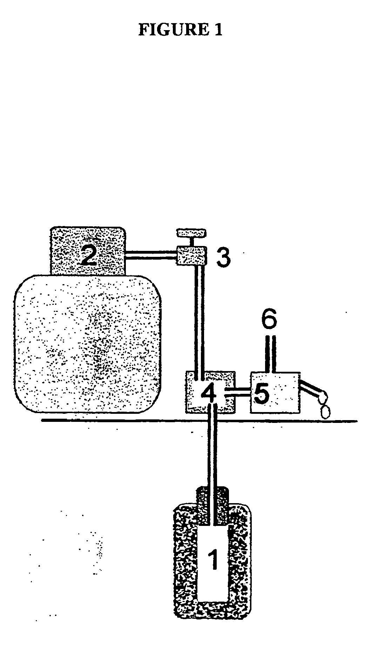

The present invention's system is practical and simple, and it is formed, as seen in Figure 1, by a porous capsule (1) installed in the soil, a pressurized gas source (2) with a flow controller (3) to adjust the pressure to a lower level than that necessary to bubble air through the porous capsule submerged in water, and a T-shaped distributor (4), which connects the porous capsule used in the invention to a pressure transducer (5) that activates irrigation whenever the gas pressure drops due to gas leak through the porous capsule in insufficiently moist soil. The transducer (5) to be used may be a differential valve, a pressure switch or any other electromechanical device to activate and interrupt the supply of water from a reservoir (6). The pressure of the gas fed to the capsule is low - typically below 0.02 MPa. The system also includes pipes connecting the elements (1), (2), (3), (4), (5) and (6), as well as all the irrigation spots.

As the amount of gas released into the soil is very small, there are no serious limitations to using commercially available gases, such as those commonly sold as domestic fuel; still, other gases such as compressed air from tanks or compressors may also be used.

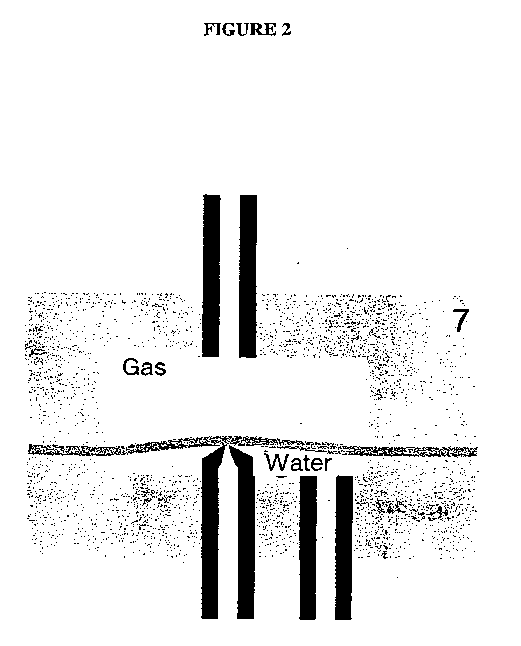

The water supply device is not of major importance in the present invention's system, and any electrical, electromechanical or even mechanical devices (valves, differential pressure transducers, ball-floats and pressure switches connected or not to hydraulic pumps) may be used, provided they are compatible with the functioning of the gas porous capsule (1). For punctual irrigation, it is preferable to use a differential valve (7), as depicted in Figure 2, in which the water flow is blocked when the gas pressure becomes sufficiently higher than the outward water pressure. When pressurization is involved, it is necessary to use electromechanical devices that activate water pumps, as mentioned above.

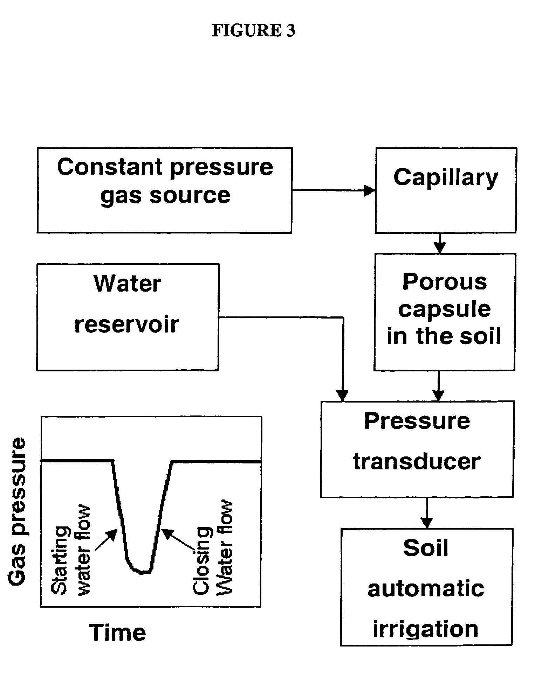

Figure 3 illustrates the simplicity of the present invention's automatic irrigation system As the soil dries, the water tension rises and the capsule releases water into the soil. Therefore, when the module water tension reaches a level higher than the critical tension - approximately the same as the porous capsule's bubbling pressure module - the pressurized gas starts leaking from the capsule (1) to the soil, causing the pressure to drop and opening a passage for the water in the differential valve (5), thus beginning irrigation. The water supply is maintained until the soil moisture rises to a level that blocks the capsule's pores, which causes the gas pressure to rise. Such rise will affect the device (5) or valve (7) and close the water flow in the device (5,7) when the moisture is higher than the critical level. The irrigation will only restart when the gas pressure drops again (due to a reduction in the soil moisture) and causes a new gas leak into the soil, thus beginning a new cycle.

## Claims

1. Automatic irrigation system comprising:
(a) porous capsule sensors (1) installed in the soil to determine the critical moisture according to the relation between the pressure within the capsule and the tension of the water present in the pores balanced with the water in the soil;
(b) means (5, 7) for supplying water to the soil activated by the variation of the gas pressure within the porous capsule;
(c) a water distribution source (6); and
(d) connecting pipes between the irrigation spots.
**characterized by the fact that**
the capsule sensor (1) is pressurized by a pressurized gas source (2) to less than the bubbling pressure of the porous capsule submerged in water.

2. Automatic irrigation system according to claim 1 **characterized by** including a flow controller (3) located between the porous capsule (1) and the pressurized gas source (2).

3. Automatic irrigation system according to claim 1, **characterized by** means (5, 7) for supplying water to the soil which work in response to the gas pressure within the porous capsule through a pressure transducer.

4. Automatic irrigation system according to claim 3 **characterized by** the fact that the pressure transducer is a differential valve.

## Patentansprüche

1. Automatisches Bewässerungssystem, das umfasst:
(a) poröse Kapselsensoren (1), die in dem Boden installiert sind, um die kritische Feuchtigkeit gemäß dem Verhältnis zwischen dem Druck in der Kapsel und der Spannung des Wassers zu bestimmen, das in den Poren im Gleichgewicht mit dem Wasser in dem Boden vorhanden ist;
(b) eine Einrichtung (5, 7) zum Zuführen von Wasser zu dem Boden, die durch die Änderung des Gasdrucks in der porösen Kapsel aktiviert wird;
(c) eine Wasserverteilungsquelle (6); und
(d) Verbindungsrohre zwischen den Bewässerungspositionen,
**gekennzeichnet durch** die Tatsache, dass
der Kapselsensor (1) **durch** eine Druckgasquelle (2) auf weniger als den Blasenbildungsdruck der in Wasser eingetauchten porösen Kapsel unter Druck gesetzt wird.

2. Automatisches Bewässerungssystem nach Anspruch 1, **dadurch gekennzeichnet, dass** es einen Strömungsregler (3) enthält, der zwischen der porösen Kapsel (1) und der Druckgasquelle (2) angeordnet ist.

3. Automatisches Bewässerungssystem nach Anspruch 1, **gekennzeichnet durch** eine Einrichtung (5, 7) zum Zuführen von Wasser zu dem Boden, die in Reaktion auf den Gasdruck in der porösen Kapsel über einen Druckwandler arbeitet.

4. Automatisches Bewässerungssystem nach Anspruch 3, **gekennzeichnet durch** die Tatsache, dass der Druckwandler ein Differenzdruckventil ist.

## Revendications

1. Système d'irrigation automatique **caractérisé en ce qu'**il comprend :
(a) des capteurs à capsule poreuse (1) disposés dans le sol pour déterminer l'humidité critique selon le rapport entre la pression dans la capsule et la tension de l'eau présente dans les pores en équilibre avec l'eau dans le sol ;
(b) des moyens (5, 7) pour apporter de l'eau au sol activés par la variation de la pression du gaz dans la capsule poreuse ;
(c) une source de distribution d'eau (6) ; et
(d) des tuyaux de connexion entre les points d'irrigation ;
**caractérisé en ce que** le capteur à capsule (1) est mis sous pression par une source de gaz sous pression (2) à une pression inférieure à la pression de barbotage de la capsule poreuse immergée dans l'eau.

2. Système d'irrigation automatique selon la revendication 1, **caractérisé en ce qu'**il comprend un dispositif de contrôle d'écoulement (3) situé entre la capsule poreuse (1) et la source de gaz sous pression (2).

3. Système d'irrigation automatique selon la revendication 1, **caractérisé en ce qu'**il comprend des moyens (5, 7) pour apporter de l'eau au sol qui fonctionnent en fonction de la pression du gaz dans la capsule poreuse par l'intermédiaire d'un capteur de pression.

4. Système d'irrigation automatique selon la revendication 3, **caractérisé en ce que** le capteur de pression est une valve différentielle.
